# EUROPEAN PATENT SPECIFICATION

(11) **EP 3 998 403 B1**
(45) Date of publication and mention of the grant of the patent: **28.08.2024**
(21) Application number: 20837707.7
(22) Date of filing: 08.07.2020
(51) Int. Cl.: F04B 27/18, F16K 31/40

(54) **CAPACITY CONTROL VALVE**
KAPAZITÄTSSTEUERUNGSVENTIL
SOUPAPE DE COMMANDE DE CAPACITÉ

(30) Priority: 11.07.2019 JP 2019129662
(43) Date of publication of application: 18.05.2022
(73) Proprietor: Eagle Industry Co., Ltd., Minato-ku Tokyo 105-8587 (JP)
(72) Inventor: FUKUDOME, Kohei, Tokyo 105-8587 (JP); SHIRAFUJI, Keigo, Tokyo 105-8587 (JP); HAYAMA, Masahiro, Tokyo 105-8587 (JP); KANZAKI, Toshinori, Tokyo 105-8587 (JP); TAKAHASHI, Wataru, Tokyo 105-8587 (JP)
(74) Representative: WSL Patentanwälte Partnerschaft mbB
(86) International application number: PCT/JP2020/026722
(87) International publication number: WO 2021/006301

(56) References cited:
- EP-A1- 0 771 948
- WO-A1-2019/131703
- WO-A1-2019/131703
- JP-A- 2006 017 035
- US-A- 5 048 790
- US-A- 5 063 829
- US-A1- 2001 016 168

## Description

### {TECHNICAL FIELD}

The present invention relates to a capacity control valve that variably controls capacity of a working fluid, for example, a capacity control valve that controls a discharge amount of a variable displacement compressor used for an air conditioning system of an automobile according to pressure.

### {BACKGROUND ART}

A variable displacement compressor used for an air conditioning system of an automobile, etc. includes a rotating shaft to be driven and rotated by an engine, a swash plate coupled to the rotating shaft in such a manner that a tilt angle is variable, compressing pistons coupled to the swash plate, etc., and by changing the tilt angle of the swash plate, changes a stroke amount of the pistons to control a discharge amount of a fluid. This tilt angle of the swash plate can be continuously changed by appropriately controlling pressure in a control chamber while utilizing a suction pressure Ps of a suction chamber that suctions the fluid, a discharge pressure Pd of a discharge chamber that discharges the fluid pressurized by the pistons, and a control pressure Pc of the control chamber that houses the swash plate, by means of a capacity control valve to be driven to open and close by electromagnetic force.

At the time of continuously driving the variable displacement compressor, the capacity control valve performs normal control in which energization is controlled by a control computer, a valve body is moved in an axial direction by electromagnetic force generated in a solenoid, and a CS valve provided between a control port through which a control fluid of the control pressure Pc passes and a suction port through which a suction fluid of the suction pressure Ps passes is opened and closed to adjust the control pressure Pc of the control chamber of the variable displacement compressor.

For example, the capacity control valve shown in Patent Citations 1 and 2 mainly includes a valve housing including a Pc port through which the control fluid passes and a Ps port through which the suction fluid passes, and the CS valve that can switch the state of communication between the Pc port and the Ps port, and opens and closes the CS valve to adjust the control pressure Pc. The CS valve includes a CS valve body that is driven in the axial direction by the solenoid, and a CS valve seat which is provided between the Pc port and the Ps port and with which the CS valve body can come into contact, and performs control to bring the CS valve into a closed state so that the control pressure Pc is increased, or bring the CS valve into an open state so that the control pressure Pc is lowered. Patent Citation 3 discloses a capacity control valve having a solenoid-driven pilot valve, where a main valve body is moved based on a pressure difference between discharge pressure Pd and suction pressure Ps acting on different end parts of the main valve body. The pressure acting on the upper part of the valve body is kept at discharge pressure Pd. The pressure acting on the lower part of the valve body is controlled, on one side by said pilot valve opening and closing a channel between said upper and lower parts of the valve body, and on the other side by an orifice connecting said lower part with suction pressure Ps. Thus, by controlling said pilot valve, in combination with a biasing spring acting on the main valve body, the main valve body is moved in one or another direction, thus alternatively opening and closing connections Pc-Pd and Pc-Ps, thus controlling crankcase pressure Pc and consequently controlling capacity of a compressor. It

### {CITATION LIST}

### {Patent Literature}

Patent Citation 1: JP 3088536 B2 (PAGE 3, FIG. 2)
Patent Citation 2: JP 3581598 B2 (PAGE 4, FIG. 8)
Patent Citation 3: EP 0771948 A1

### {SUMMARY OF INVENTION}

### {Technical Problem}

By the way, in the air conditioning system, prompt temperature control is required, and there is a potential demand such as wanting to change the flow rate or pressure of a refrigerant to be supplied from the variable displacement compressor in a short time. However, since the capacity control valve of Patent Citations 1 and 2 has a structure in which the CS valve body is directly driven by driving force of the solenoid, in order to increase the flow rate of the refrigerant controlled by the capacity control valve, it is necessary to enlarge the solenoid, the valve body, the valve opening diameter, etc. Thus, energy efficiency deteriorates and it is difficult for the energy efficiency to coexist with reducing the size of the capacity control valve itself.

The present invention has been made in light of such a problem, and an object of the present invention is to provide a capacity control valve having excellent energy efficiency and a large capacity.

### {Solution to Problem}

In order to solve the above problem, a capacity control valve according to the present invention is a capacity control valve including: a valve housing to which a suction fluid of a suction pressure and a control fluid of a control pressure are supplied; a solenoid; a CS valve formed of a CS valve body that partitions an inside of the valve housing into a first space and a second space and moves according to the suction pressure of the suction fluid and the control pressure of the control fluid, and a CS valve seat with which the CS valve body is configured for coming into contact; a biasing member that biases the CS valve body in a valve closing direction of the CS valve; and a pilot valve formed of a pilot valve body to be driven by the solenoid and a pilot valve seat with which the pilot valve body is configured for coming into contact, wherein the control fluid flows into the first space, the control fluid flows into the second space via an orifice, and a fluid of the second space is dischargeable to an outside by the pilot valve. According to the aforesaid feature of the present invention, since the pilot valve to be driven by the solenoid is opened, the pressure of the second space is lowered, and a predetermined differential pressure or higher is applied to the CS valve body, the driving electric power of the solenoid can be reduced, and the valve opening degree of the CS valve can be increased.

It may be preferable that the pilot valve discharges the fluid of the second space toward a suction chamber in which an external suction fluid is housed. According to this preferable configuration, the fluid can be circulated in a closed system.

It may be preferable that an opening degree of the pilot valve is adjustable. According to this preferable configuration, since the pressure of the fluid of the second space is adjustable, the opening degree of the CS valve is adjustable.

It may be preferable that the CS valve body has a piston shape, and a cylindrical side portion of the CS valve body slides on an inner peripheral surface of the valve housing. According to this preferable configuration, since the suction fluid can be kept in a sealed state by the CS valve body, the capacity control valve can be compactly configured.

It may be preferable that an elastic seal member is disposed between the cylindrical side portion of the CS valve body and the inner peripheral surface of the valve housing. According to this preferable configuration, the CS valve has excellent sealing performance.

It may be preferable that a complementary step is formed in the cylindrical side portion of the CS valve body and the inner peripheral surface of the valve housing. According to this preferable that, the CS valve has excellent sealing performance.

It may be preferable that the orifice is provided in the CS valve body. According to this preferable configuration, the control fluid can reliably flow into the second space from the first space, and the capacity control valve can be compactly configured.

It may be preferable that the pilot valve seat is formed in the second space. According to this preferable configuration, since a part of the pilot valve body is disposed in the second space, and the pressure of the second space is applied to the pilot valve body in a direction in which the pilot valve is closed, there is little risk that the pilot valve is opened when the solenoid is not energized.

It may be preferable that the CS valve seat is formed of an elastic body. According to this preferable configuration, the CS valve can be reliably closed.

It may be preferable that the biasing member is disposed in the second space. According to this preferable configuration, since the biasing member can be disposed using the space into which the control fluid flows through the orifice, the capacity control valve can be compactly configured.

It may be preferable that the valve housing is formed of a control fluid side housing in which the CS valve seat is provided, and a suction fluid side housing in which the pilot valve seat is provided. According to this configuration, the CS valve can be easily assembled and configured.

### {BRIEF DESCRIPTION OF DRAWINGS}

FIG. 1 a sectional view showing a structure of a capacity control valve according to a first embodiment of the present invention.
FIG. 2 is a sectional view showing a state where a pilot valve and a CS valve are closed in a non-energized state of the capacity control valve according to the first embodiment.
FIG. 3 is a sectional view showing a state where the pilot valve and the CS valve are fully opened in an energized state (when maximum current is applied) of the capacity control valve according to the first embodiment.
FIG. 4 is a sectional view showing a structure of a CS valve of a capacity control valve according to a second embodiment of the present invention.
FIG. 5 is a sectional view showing a structure of a CS valve of a capacity control valve according to a third embodiment of the present invention.
FIG. 6 is a sectional view showing a structure of a CS valve of a capacity control valve according to a fourth embodiment of the present invention.
FIG. 7 is a sectional view showing a structure of a CS valve of a capacity control valve according to a fifth embodiment of the present invention.
FIG. 8 is a sectional view showing a structure of a CS valve of a capacity control valve according to a sixth embodiment of the present invention.

### {DESCRIPTION OF EMBODIMENTS}

Modes for implementing a capacity control valve according to the present invention will be described below based on embodiments.

### {First Embodiment}

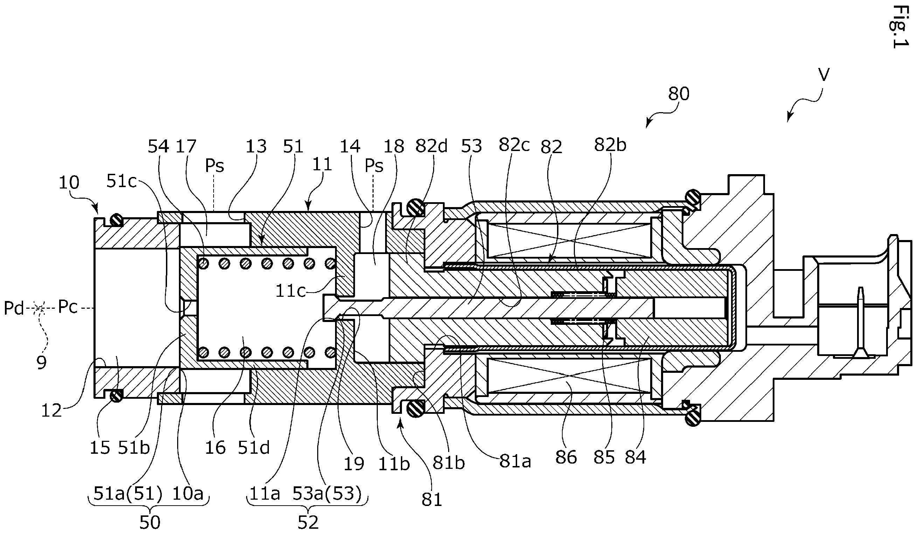

A capacity control valve according to a first embodiment of the present invention will be described with reference to FIGS. 1 to 3. Hereinafter, a description will be given based on the assumption that the right and left sides when seen from the front side of FIG. 1 are right and left sides of the capacity control valve. In detail, a description will be given based on the assumption that the left side of drawing sheets on which a first valve housing 10 is disposed is a left side of the capacity control valve and the right side of the drawing sheets on which a solenoid 80 is disposed is a right side of the capacity control valve.

A capacity control valve V of the present invention is assembled into a variable displacement compressor (not shown) used for an air conditioning system of an automobile, etc., and by variably controlling the pressure of a working fluid (hereinafter, simply referred to as a "fluid") which is a refrigerant, controls the discharge amount of the variable displacement compressor to adjust the air conditioning system to a desired cooling ability.

First, the variable displacement compressor will be described. The variable displacement compressor includes a casing including a discharge chamber, a suction chamber, a control chamber, and a plurality of cylinders. Incidentally, the variable displacement compressor is provided with a communication passage that allows direct communication between the discharge chamber and the control chamber, and the communication passage is provided with a fixed orifice 9 that adjusts and balances the pressures of the discharge chamber and the control chamber (refer to FIGS. 1 to 3).

In addition, the variable displacement compressor includes a rotating shaft to be driven and rotated by an engine (not shown) installed outside the casing; a swash plate coupled to the rotating shaft so as to be tiltable by a hinge mechanism in the control chamber; and a plurality of pistons coupled to the swash plate and reciprocatably fitted in the respective cylinders. The tilt angle of the swash plate is continuously changed by appropriately controlling pressure in the control chamber while utilizing a suction pressure Ps of the suction chamber that suctions the fluid, a discharge pressure Pd of the discharge chamber that discharges the fluid pressurized by the pistons, and a control pressure Pc of the control chamber that houses the swash plate, by means of the capacity control valve V to be driven to open and close by electromagnetic force. Thereby, the stroke amount of the pistons is changed to control the discharge amount of the fluid.

As shown in FIG. 1, in the capacity control valve V assembled into the variable displacement compressor, electric current which energizes a coil 86 forming the solenoid 80 is adjusted to perform opening and closing control of a pilot valve 52 in the capacity control valve V, and a predetermined differential pressure or higher is applied to a CS valve body 51 to adjust the opening degree of a CS valve 50, and thereby the fluid flowing out from the control chamber to the suction chamber is controlled, so that the control pressure Pc in the control chamber is variably controlled. Incidentally, the control pressure Pc in the control chamber can be raised by always supplying a discharge fluid of the discharge pressure Pd of the discharge chamber to the control chamber via the fixed orifice 9 and closing the CS valve 50 in the capacity control valve V.

In the present embodiment, the CS valve 50 is formed of the CS valve body 51 and a CS valve seat 10a formed in an inner peripheral surface of the first valve housing 10 serving as a valve housing and a control fluid side housing, and an axially left end 51a of the CS valve body 51 comes into contact with and separates from the CS valve seat 10a to open and close the CS valve 50. The pilot valve 52 is formed of a rod 53 serving as a pilot valve body and a pilot valve seat 11a formed in an inner peripheral surface of a second valve housing 11 serving as a valve housing and a suction fluid side housing. An abutting portion 53a formed in an axially left end portion of the rod 53 comes into contact with and separates from the pilot valve seat 11a to open and close the pilot valve 52.

Next, a structure of the capacity control valve V will be described. As shown in FIG. 1, the capacity control valve V mainly includes the first valve housing 10 and the second valve housing 11 made of a metallic material or a resin material; the CS valve body 51 disposed in the first valve housing 10 and the second valve housing 11 so as to be reciprocatable in an axial direction; the rod 53 disposed in the second valve housing 11 so as to be reciprocatable in the axial direction; and the solenoid 80 that is connected to the second valve housing 11 and exerts driving force on the rod 53.

As shown in FIG. 1, the solenoid 80 mainly includes a casing 81 including an opening portion 81a that is open to the left in the axial direction; a center post 82 that has a substantially cylindrical shape and is inserted into the opening portion 81a of the casing 81 from the left in the axial direction and fixed on a radially inner side of the casing 81; the rod 53 which is inserted into the center post 82 and reciprocatable in the axial direction and in which the abutting portion 53a formed in the axially left end portion of the rod 53 is disposed on the left in the axial direction of the pilot valve seat 11a; a movable iron core 84 to which an axially right end portion of the rod 53 is inserted and fixed; a coil spring 85 provided between the center post 82 and the movable iron core 84 to bias the movable iron core 84 to the right in the axial direction which is a valve closing direction of the pilot valve 52; and the coil 86 for excitation wound on an outer side of the center post 82 via a bobbin. Incidentally, in the present embodiment, the rod 53 serving as the pilot valve body forms a part of the solenoid 80.

A recessed portion 81b in which a radially inner side of an axially left end is recessed to the right in the axial direction is formed in the casing 81. An axially right end portion of the second valve housing 11 is inserted and fixed to the recessed portion 81b in a substantially sealed manner.

The center post 82 is made of a rigid body that is a magnetic material such as iron or silicon steel, and includes a cylindrical portion 82b in which an insertion hole 82c is formed into which the rod 53 extending in the axial direction is inserted, and a flange portion 82d having an annular shape and extending from an outer peripheral surface of an axially left end portion of the cylindrical portion 82b in a radially outward direction.

In addition, the center post 82 is inserted and fixed to a recessed portion 11b, which is formed at an axially right end of the second valve housing 11 inserted and fixed to the recessed portion 81b of the casing 81, in a substantially sealed manner in a state where an axially right end surface of the flange portion 82d is abutted against a bottom surface of the recessed portion 81b of the casing 81 from the left in the axial direction.

As shown in FIGS. 1 to 3, the CS valve body 51 has a piston shape in which a radially inner side of an axially right end is recessed to the left in the axial direction, and has an orifice 51c penetrating through the center of a bottom portion 51b of the CS valve body 51 in the axial direction. In addition, a cylindrical side portion 51d of the CS valve body 51 is slidable on the inner peripheral surface of the second valve housing 11 in a substantially sealed state.

In addition, a coil spring 54 serving as biasing member which biases the CS valve body 51 toward the axially left side, namely, toward the CS valve seat 10a formed at the axially right end of the first valve housing 10 is internally fitted to the CS valve body 51. Incidentally, an axially left end of the coil spring 54 abuts against an axially right end surface of the bottom portion 51b of the CS valve body 51 and an axially right end of the coil spring 54 abuts against an axially left end surface of a partition wall 11c formed in the axially right end portion of the second valve housing 11, and thereby the CS valve body 51 is biased to the left in the axial direction which is a valve closing direction of the CS valve 50. In addition, the coil spring 54 is a compression spring.

As shown in FIGS. 1 to 3, in the valve housing of the first embodiment, an axially left end portion of the second valve housing 11 is externally fitted to an axially right end portion of the first valve housing 10 from the right in the axial direction, and thereby the first valve housing 10 and the second valve housing 11 are integrally connected and fixed to each other in a substantially sealed state. A Pc port 12 communicating with the control chamber of the variable displacement compressor is formed in the first valve housing 10. In addition, a first Ps port 13 and a second Ps port 14 which communicate with the suction chamber of the variable displacement compressor are formed in the second valve housing 11. Incidentally, the second Ps port 14 is formed on an axially right side of the first Ps port 13, in detail, the pilot valve seat 11a formed in the partition wall 11c.

The first valve housing 10 has a cylindrical shape, and the CS valve seat 10a is provided in an opening edge portion on the axially right side. In addition, inside the first valve housing 10, a first control fluid supply chamber 15 is provided that serves as one space to which the control fluid is supplied from the Pc port 12 formed of an axially left opening, and that is partitioned off to the axially left side by the CS valve body 51. Incidentally, the first control fluid supply chamber 15 is defined by the inner peripheral surface of the first valve housing 10 and an axially left end surface of the bottom portion 51b of the CS valve body 51.

Inside the second valve housing 11, there are provided: a second control fluid supply chamber 16 serving as the other space which is partitioned off to the axially right side by the CS valve body 51 and to which the control fluid is supplied from the first control fluid supply chamber 15 through the orifice 51c formed in the bottom portion 51b of the CS valve body 51; a first suction fluid supply chamber 17 to which the suction fluid is supplied from the first Ps port 13 on an outer periphery of the CS valve body 51; a second suction fluid supply chamber 18 to which the suction fluid is supplied from the second Ps port 14; and a valve port portion 19 which penetrates through the center of the partition wall 11c extending in a radial direction between the second control fluid supply chamber 16 and the second suction fluid supply chamber 18 and in which the pilot valve seat 11a is formed in an opening edge portion of the axially left side.

The second control fluid supply chamber 16 is defined by the inner peripheral surface of the second valve housing 11 on an axially left side of the partition wall 11c, an inner peripheral surface of the CS valve body 51, an axially left surface of the partition wall 11c, and an outer surface of the rod 53 on an axially left side of the abutting portion 53a. Namely, the pilot valve seat 11a is formed in the second control fluid supply chamber 16. In addition, the coil spring 54 which biases the CS valve body 51 to the left in the axial direction is disposed in the second control fluid supply chamber 16.

In addition, the inner peripheral surface of the second valve housing 11 and an outer peripheral surface of the cylindrical side portion 51d of the CS valve body 51 are slightly separated from each other in the radial direction, and thereby a very small gap is formed therebetween. The CS valve body 51 is smoothly movable relatively with respect to the second valve housing 11 in the axial direction, and the gap functions as a clearance seal that divides the second control fluid supply chamber 16 from the first suction fluid supply chamber 17 in a substantially sealed manner.

Next, the operation of the capacity control valve V, namely, the opening and closing operation of the pilot valve 52 and the CS valve 50 will be described.

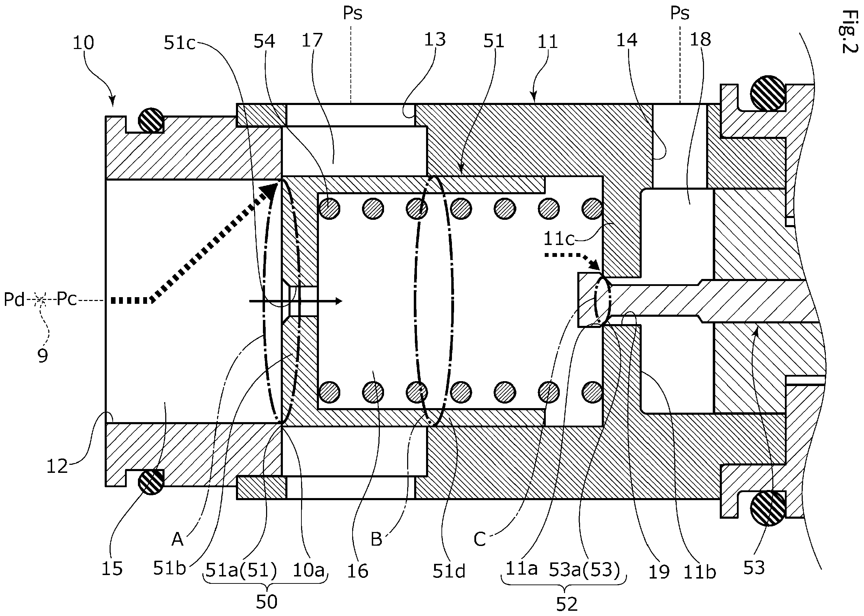

First, a non-energized state of the capacity control valve V will be described. As shown in FIGS. 1 and 2, when the capacity control valve V is in a non-energized state, the rod 53 is pressed to the right in the axial direction by biasing force of the coil spring 85 forming the solenoid 80, so that the abutting portion 53a of the rod 53 is seated on the pilot valve seat 11a to close the pilot valve 52. In addition, the CS valve body 51 is pressed to the left in the axial direction by biasing force of the coil spring 54, so that the axially left end 51a of the CS valve body 51 is seated on the CS valve seat 10a to close the CS valve 50.

At this time, the biasing force Fₛₚ₁ of the coil spring 54 toward the right in the axial direction and force F_{P16} induced by the pressure of the fluid in the second control fluid supply chamber 16 applied according to a pressure receiving seal diameter C (refer to FIG. 2) in the pilot valve 52 are applied to the rod 53. Force F_{P18} induced by the pressure of the fluid in the second suction fluid supply chamber 18 applied toward the left in the axial direction according to the pressure receiving seal diameter C in the pilot valve 52 is applied to the rod 53. Namely, force F_{rod1} = Fₛₚ₁ + F_{P16} - F_{P18} is applied to the rod 53, given that a right direction is positive.

In addition, force F_{P15} induced by the pressure of the fluid in the first control fluid supply chamber 15 applied to the CS valve body 51 toward the right in the axial direction according to a pressure receiving seal diameter A (refer to FIG. 2) in the CS valve 50 is applied to the CS valve body 51. Biasing force Fₛₚ₂ of the coil spring 54 toward the left in the axial direction and the force F_{P16} induced by the pressure of the fluid in the second control fluid supply chamber 16 applied to the CS valve body 51 according to a pressure receiving seal diameter B (refer to FIG. 2) in the clearance seal between the inner peripheral surface of the second valve housing 11 and the outer peripheral surface of the cylindrical side portion 51d of the CS valve body 51 are applied to the CS valve body 51. Namely, force F_{rod2} = F_{P15} - F_{P16} - Fₛₚ₂ is applied to the CS valve body 51, given that the right direction is positive.

In detail, since the first control fluid supply chamber 15 and the second control fluid supply chamber 16 communicate with each other through the orifice 51c formed in the CS valve body 51, the control fluid supplied from the Pc port 12 flows into the first control fluid supply chamber 15 and the second control fluid supply chamber 16. Incidentally, in the first embodiment, the pressure receiving seal diameter B of the CS valve body 51 to which the pressure of the fluid in the second control fluid supply chamber 16 is applied is made larger than the pressure receiving seal diameter A of the CS valve body 51 to which the pressure of the fluid in the first control fluid supply chamber 15 is applied (i.e., A < B).

In such a manner, since the fluid flowing into the first control fluid supply chamber 15 and the second control fluid supply chamber 16 is the same as the control fluid to be supplied from the Pc port 12, and the pressure receiving seal diameter B of the CS valve body 51 is made larger than the pressure receiving seal diameter A, the force F_{P16} induced by the pressure of the fluid applied to the CS valve body 51 to the left in the axial direction is larger than the force F_{P15} induced by the pressure of the fluid applied to the CS valve body 51 to the right in the axial direction (i.e., F_{P15} < F_{P16}), and the closed state of the CS valve 50 can be reliably maintained by the resultant force F_{P16} + Fₛₚ₂ of the force F_{P16} and the biasing force Fₛₚ₂ of the coil spring 54 applied toward the left in the axial direction.

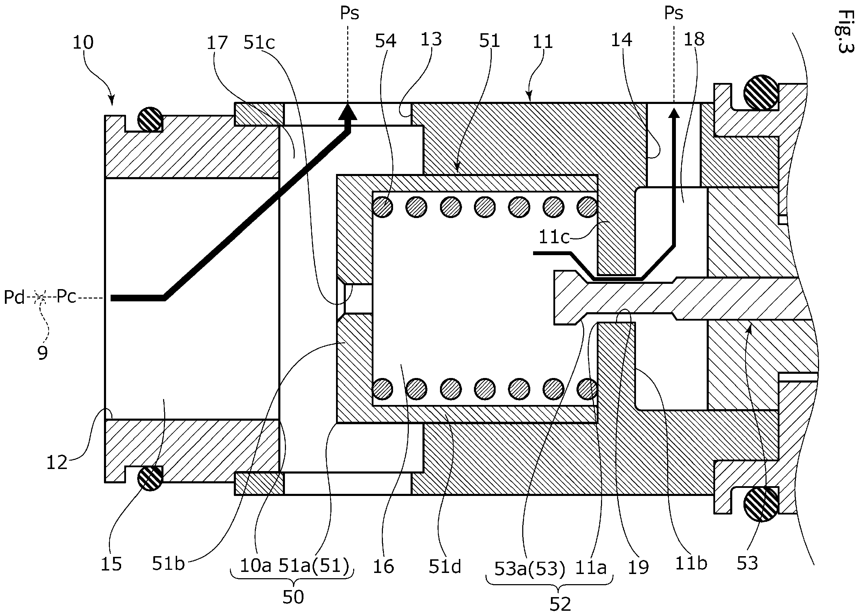

Next, an energized state of the capacity control valve V will be described. Here, particularly, as shown in FIG. 3, an operation in which the CS valve 50 is fully opened in a maximum energized state of the capacity control valve V will be described. When electromagnetic force Fₛₒₗ generated by the application of electric current to the solenoid 80 exceeds the force F_{rod1} (i.e., Fₛₒₗ > F_{rod1}), the movable iron core 84 is pulled toward the axially left side, namely, toward a center post 82 side, and the rod 53 fixed to the movable iron core 84 moves to the left in the axial direction, and thereby the abutting portion 53a of the rod 53 separates from the pilot valve seat 11a of the second valve housing 11 to fully open the pilot valve 52. Accordingly, the fluid in the second control fluid supply chamber 16 is discharged to the suction chamber through the valve port portion 19, the second suction fluid supply chamber 18, and the second Ps port 14, and the pressure of the fluid in the second control fluid supply chamber 16 is lowered.

When the pressure of the fluid in the second control fluid supply chamber 16 is lowered by the opening of the pilot valve 52, and the difference between the pressure of the fluid in the first control fluid supply chamber 15 and the pressure of the fluid in the second control fluid supply chamber 16 reaches a predetermined differential pressure or higher, namely, the force F_{P15} induced by the pressure of the fluid applied to the CS valve body 51 to the right in the axial direction exceeds the resultant force of the force F_{P16} induced by the pressure of the fluid applied to the CS valve body 51 to the left in the axial direction and the biasing force Fₛₚ₂ of the coil spring 54 (i.e., F_{P15} > F_{P16} + Fₛₚ₂), the axially left end 51a of the CS valve body 51 separates from the CS valve seat 10a of the first valve housing 10, and thereafter, the CS valve body 51 moves to the right in the axial direction and an axially right end surface of the cylindrical side portion 51d of the CS valve body 51 abuts against the axially left end surface of the partition wall 11c, so that the CS valve 50 is fully opened.

In addition, even when the capacity control valve V is in an energized state, namely, at the time of normal control, in other words, at the time of so-called duty control, the pilot valve 52 is slightly opened with low electric current, the pressure in the second control fluid supply chamber 16 is lowered, and the predetermined differential pressure or higher is applied to the CS valve body 51, and thereby the CS valve body 51 can be stroked more than the stroke width of the rod 53 by driving force of the solenoid 80 to open the CS valve 50. In such a manner, the opening degree of the CS valve 50 is adjustable according to the opening degree of the pilot valve 52.

In addition, since the capacity control valve V performs Pc-Ps control to open and close the CS valve 50 so that the control fluid of the control pressure Pc supplied from the Pc port 12 is supplied to the suction chamber via the first Ps port 13 and the control pressure Pc of the control chamber is lowered, namely, since the discharge fluid of the discharge pressure Pd which is a high pressure is not directly controlled, the control pressure Pc can be finely adjusted by the valve opening degree of the CS valve 50 to be adjusted by balancing between the electromagnetic force of the solenoid 80 and the differential pressure applied to the CS valve body 51.

As described above, in the capacity control valve V, the pilot valve 52 to be driven by the solenoid 80 is opened, the pressure in the second control fluid supply chamber 16 is lowered, and the predetermined differential pressure or higher is applied to the CS valve body 51. Therefore, the driving electric power of the solenoid 80 can be reduced, and the valve opening degree of the CS valve 50 can be increased. In such a manner, since the opening degree of the CS valve 50 can be increased, even when the target value is large, a large flow rate can be promptly supplied, and the variable displacement compressor can be controlled with good response.

In addition, since the pilot valve 52 discharges the fluid in the second control fluid supply chamber 16 toward the suction chamber of the variable displacement compressor in which an external suction fluid is housed, the fluid can be circulated in a closed system.

In addition, the opening degree of the pilot valve 52 is adjustable by adjusting electric current that energizes the solenoid 80, and thereby the pressure of the fluid in the second control fluid supply chamber 16 is adjustable, so that the opening degree of the CS valve 50 is adjustable. In addition, since the control fluid is partitioned by the CS valve body 51, and flows into the pilot valve 52 via the second control fluid supply chamber 16, it is difficult for the control fluid to flow out from the pilot valve 52.

In addition, since the CS valve body 51 has a piston shape, and the cylindrical side portion 51d of the CS valve body 51 slides on the inner peripheral surface of the second valve housing 11, the suction fluid supplied from the first Ps port 13 to the first suction fluid supply chamber 17 can be kept in a substantially sealed state by the clearance seal formed between the inner peripheral surface of the second valve housing 11 and the outer peripheral surface of the cylindrical side portion 51d of the CS valve body 51. In other words, since the control fluid is easily maintained in the second control fluid supply chamber 16, in a non-energized state of the capacity control valve V, it is easy to substantially uniformly maintain the pressures of the first control fluid supply chamber 15 and the second control fluid supply chamber 16. In addition, since the second control fluid supply chamber 16 and the first suction fluid supply chamber 17 are divided from each other in a substantially sealed manner by the clearance seal formed between the inner peripheral surface of the second valve housing 11 and the outer peripheral surface of the cylindrical side portion 51d of the CS valve body 51, there is no need to separately prepare a member that divides the second control fluid supply chamber 16 from the first suction fluid supply chamber 17, the number of components is reduced, and the structure of the capacity control valve V can be simplified.

In addition, since the cylindrical side portion 51d of the CS valve body 51 slides on the inner peripheral surface of the second valve housing 11, the CS valve body 51 is guided by the inner peripheral surface of the second valve housing 11, and thereby the accuracy of operation of the CS valve body 51 can be improved.

In addition, since the CS valve body 51 is provided with the orifice 51c, the control fluid can reliably flow into the second control fluid supply chamber 16 from the first control fluid supply chamber 15 partitioned off by the CS valve body 51, and the capacity control valve V can be compactly configured.

In addition, since the orifice 51c is formed to penetrate through the CS valve body 51 in the axial direction, processing becomes easier than when a communication passage that allows communication between the first control fluid supply chamber 15 and the second control fluid supply chamber 16 is formed in the valve housing.

In addition, since the coil spring 54 which biases the CS valve body 51 to the left in the axial direction which is the valve closing direction of the CS valve 50 is disposed in the second control fluid supply chamber 16 into which the control fluid flows through the orifice 51c, a space in which the coil spring 54 is disposed is not required to be secured on a solenoid 80 side, and the capacity control valve V can be compactly configured. In addition, since the coil spring 54 is disposed on a side opposite to the solenoid 80 with the partition wall 11c of the second valve housing 11 interposed therebetween, the operation of the CS valve body 51 can be stabilized.

In addition, since the pilot valve seat 11a is formed in the second control fluid supply chamber 16, and the control pressure Pc in the second control fluid supply chamber 16 is applied to the axially left end portion of the rod 53 to the right in the axial direction which is the valve closing direction of the pilot valve 52, the pilot valve 52 can be prevented from being opened when the solenoid 80 is not energized.

In addition, since the valve housing is configured by integrally connecting and fixing the first valve housing 10 on the control fluid side in which the CS valve seat 10a is provided and the second valve housing 11 on the suction fluid side in which the pilot valve seat 11a is provided, the CS valve 50 can be easily assembled and configured by inserting the CS valve body 51 and the coil spring 54 into the second valve housing 11, and then connecting and fixing the second valve housing 11 to the first valve housing 10.

Incidentally, in the first embodiment, a mode has been provided as an example in which the pressure receiving seal diameter B of the CS valve body 51 to which the fluid in the second control fluid supply chamber 16 is applied is larger than the pressure receiving seal diameter A of the CS valve body 51 to which the fluid in the first control fluid supply chamber 15 is applied (i.e., A < B); however, the pressure receiving seal diameter A may be set slightly larger than the pressure receiving seal diameter B (i.e., A > B) to facilitate bringing the CS valve 50 into an open state, or the pressure receiving seal diameter A and the pressure receiving seal diameter B may be set the same (i.e., A = B) such that the influence of the pressure of the fluid on the CS valve body 51 in a non-energized state of the capacity control valve V can be cancelled. In such a manner, needless to say, the pressure receiving seal diameters A and B can be appropriately modified according to the application.

### {Second Embodiment}

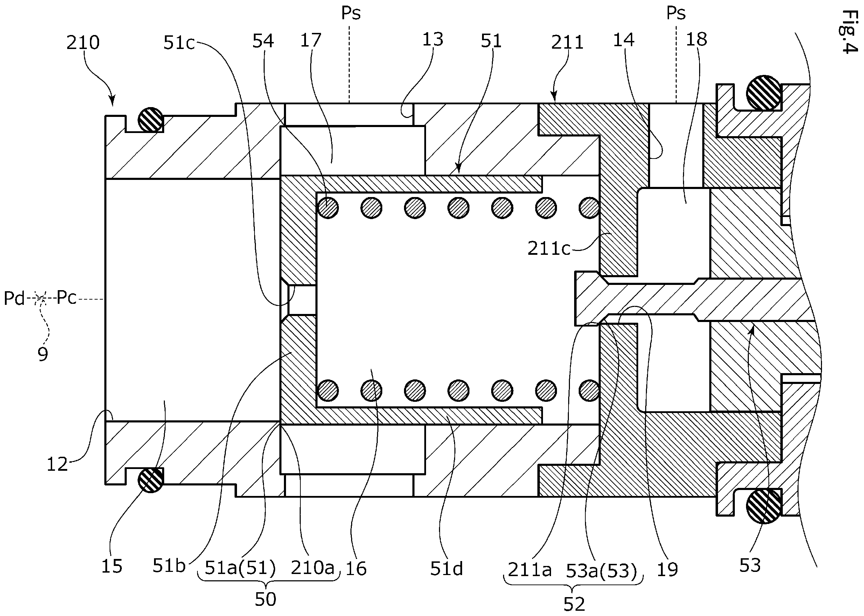

A capacity control valve according to a second embodiment of the present invention will be described with reference to FIG. 4. Incidentally, description of the same and duplicated configurations as the configurations of the first embodiment will be omitted.

As shown in FIG. 4, in the second embodiment of the present invention, the Pc port 12 communicating with the control chamber of the variable displacement compressor and the first Ps port 13 communicating with the suction chamber of the variable displacement compressor are formed in a first valve housing 210. In addition, the second Ps port 14 communicating with the suction chamber of the variable displacement compressor is formed in a second valve housing 211.

Inside the first valve housing 210, there are provided: a CS valve seat 210a; the first control fluid supply chamber 15 serving as one space to which the control fluid is supplied from the Pc port 12 formed of the axially left opening and which is partitioned off to the axially left side by the CS valve body 51; the second control fluid supply chamber 16 serving as the other space which is partitioned off to the axially right side by the CS valve body 51 and to which the control fluid is supplied from the first control fluid supply chamber 15 through the orifice 51c formed in the bottom portion 51b of the CS valve body 51; and the first suction fluid supply chamber 17 to which the suction fluid is supplied from the first Ps port 13 on the outer periphery of the CS valve body 51.

Inside the second valve housing 211, there are provided: the second suction fluid supply chamber 18 to which the suction fluid is supplied from the second Ps port 14; and the valve port portion 19 which penetrates through the center of a partition wall 211c extending in the radial direction between the second control fluid supply chamber 16 provided inside the first valve housing 210 and the second suction fluid supply chamber 18 and in which a pilot valve seat 211a is formed in an axially left edge portion.

In addition, an inner peripheral surface of the first valve housing 210 and the outer peripheral surface of the cylindrical side portion 51d of the CS valve body 51 are slightly separated from each other in the radial direction, and thereby a very small gap is formed therebetween. The CS valve body 51 is smoothly movable relatively with respect to the first valve housing 210 in the axial direction, and the gap functions as a clearance seal that divides the second control fluid supply chamber 16 from the first suction fluid supply chamber 17 in a substantially sealed manner.

According to this configuration, since a valve housing is configured by integrally connecting and fixing the first valve housing 210 on the control fluid side in which the CS valve seat 210a is provided and the second valve housing 211 on the suction fluid side in which the pilot valve seat 211a is provided, the CS valve 50 can be easily assembled and configured by inserting the CS valve body 51 and the coil spring 54 into the first valve housing 210, and then connecting and fixing the first valve housing 210 to the second valve housing 211.

### {Third Embodiment}

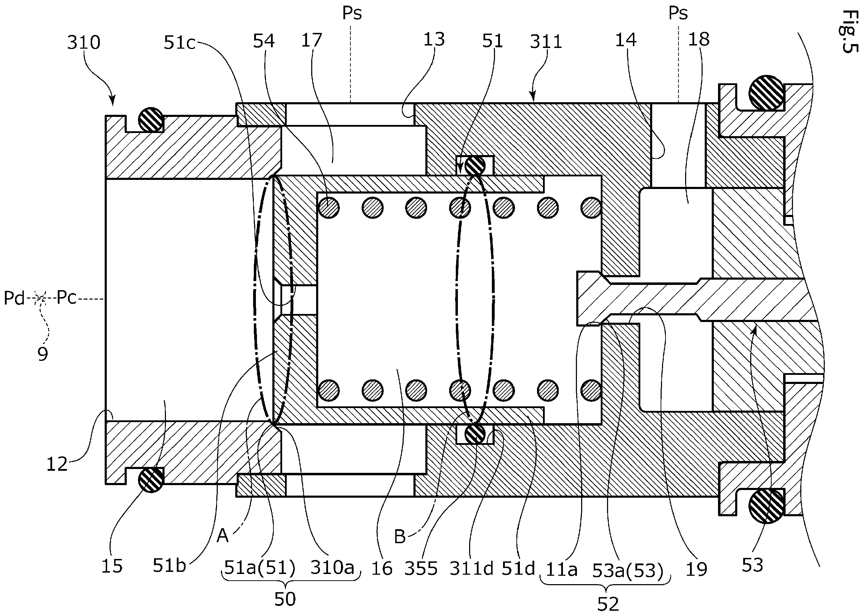

A capacity control valve according to a third embodiment of the present invention will be described with reference to FIG. 5. Incidentally, description of the same and duplicated configurations as the configurations of the first embodiment will be omitted.

As shown in FIG. 5, in the third embodiment, a first valve housing 310 has a cylindrical shape, and a tapered CS valve seat 310a is provided in an opening edge portion on the axially right side.

In addition, an annular groove 311d recessed in the radially outward direction is formed in an inner peripheral surface of a second valve housing 311, and an O-ring 355 made of rubber or resin and serving as an elastic seal member is disposed in the annular groove 311d. In addition, the O-ring 355 and the outer peripheral surface of the cylindrical side portion 51d of the CS valve body 51 are slidable on each other. Incidentally, the elastic seal member is not limited to the O-ring made of rubber or resin, and may be, for example, a rectangular ring, a D-ring, an X-ring, a T-ring, a lip packing, etc. made of rubber or resin.

According to this configuration, since the CS valve 50 has a poppet structure in which the axially left end 51a of the CS valve body 51 abuts against the tapered CS valve seat 310a, which is formed in the first valve housing 310, at a right angle, the CS valve 50 has excellent sealing performance. Further, the suction fluid supplied from the first Ps port 13 to the first suction fluid supply chamber 17 can be kept in a sealed state by the O-ring 355 provided in the annular groove 311d of the inner peripheral surface of the second valve housing 311. In other words, since the control fluid is easily maintained in the second control fluid supply chamber 16, in a non-energized state of the capacity control valve V, it is easy to uniformly maintain the pressures of the first control fluid supply chamber 15 and the second control fluid supply chamber 16.

Incidentally, since the third embodiment has a configuration in which the pressure receiving seal diameter A of the CS valve body 51 to which the fluid in the first control fluid supply chamber 15 is applied is the same as the pressure receiving seal diameter B of the CS valve body 51 to which the fluid in the second control fluid supply chamber 16 is applied (A = B), the influence of the pressure of the fluid on the CS valve body 51 in a non-energized state of the capacity control valve V is canceled.

### {Fourth Embodiment}

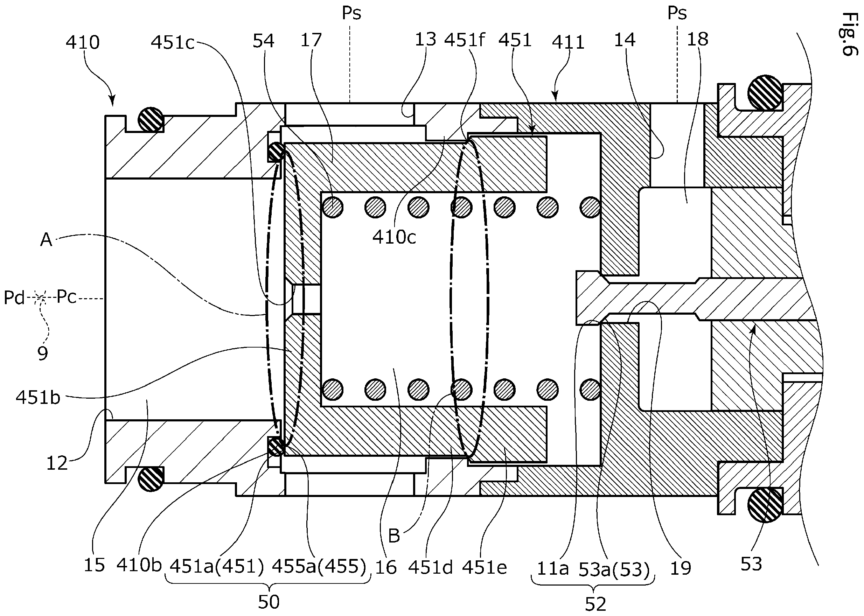

A capacity control valve according to a fourth embodiment of the present invention will be described with reference to FIG. 6. Incidentally, description of the same and duplicated configurations as the configurations of the first embodiment will be omitted.

As shown in FIG. 6, in the fourth embodiment of the present invention, a CS valve body 451 has a piston shape in which a radially inner side of an axially right end is recessed to the left in the axial direction, and has an orifice 451c penetrating through the center of a bottom portion 451b of the CS valve body 451 in the axial direction. In addition, a large diameter portion 451e is formed on an axially right side of a cylindrical side portion 451d of the CS valve body 451, and a tapered annular step portion 451f is formed between the cylindrical side portion 451d and the large diameter portion 451e in an outer peripheral surface of the CS valve body 451.

In addition, inside a first valve housing 410, an annular groove 410d recessed to the left in the axial direction is formed in an inner peripheral surface located on an axially left side of the first Ps port 13, and an O-ring 455 made of rubber or resin and serving as an elastic body is disposed in the annular groove 410d. In addition, the O-ring 455 forms a CS valve seat 455a from which an axially left end 451a of the CS valve body 451 comes into contact with and separates. Incidentally, the elastic body is not limited to the O-ring made of rubber or resin, and may be, for example, a rectangular ring or an X-ring made of rubber or resin, a C-ring made of metal, etc.

In addition, inside the first valve housing 410, an annular protrusion portion 410c protruding in the radial direction is provided in an inner peripheral surface located on an axially right side of the first Ps port 13, and in a non-energized state of the capacity control valve V, an axially right corner of the annular protrusion portion 410c and the annular step portion 451f of the CS valve body 451 can abut against each other.

According to this configuration, in the CS valve 50, since the O-ring 455 forms the CS valve seat 455a with which the axially left end 451a of the CS valve body 451 comes into contact with and separates, the CS valve 50 can be reliably closed. Further, since a complementary step is formed of the tapered annular step portion 451f of the CS valve body 451 and the annular protrusion portion 410c formed in the inner peripheral surface of the first valve housing 410, and a poppet structure is adopted in which the annular protrusion portion 410c abuts against the tapered annular step portion 451f of the CS valve body 451 at a right angle, the suction fluid supplied from the first Ps port 13 to the first suction fluid supply chamber 17 can be in a sealed state. In other words, since the control fluid is easily maintained in the second control fluid supply chamber 16, in a non-energized state of the capacity control valve V, it is easy to uniformly maintain the pressures of the first control fluid supply chamber 15 and the second control fluid supply chamber 16.

Incidentally, since the fourth embodiment has a configuration in which the pressure receiving seal diameter B of the CS valve body 451 to which the fluid in the second control fluid supply chamber 16 is applied is larger than the pressure receiving seal diameter A of the CS valve body 451 to which the fluid in the first control fluid supply chamber 15 is applied (i.e., A < B), the closed state of the CS valve 50 in a non-energized state of the capacity control valve V can be reliably maintained.

### {Fifth Embodiment}

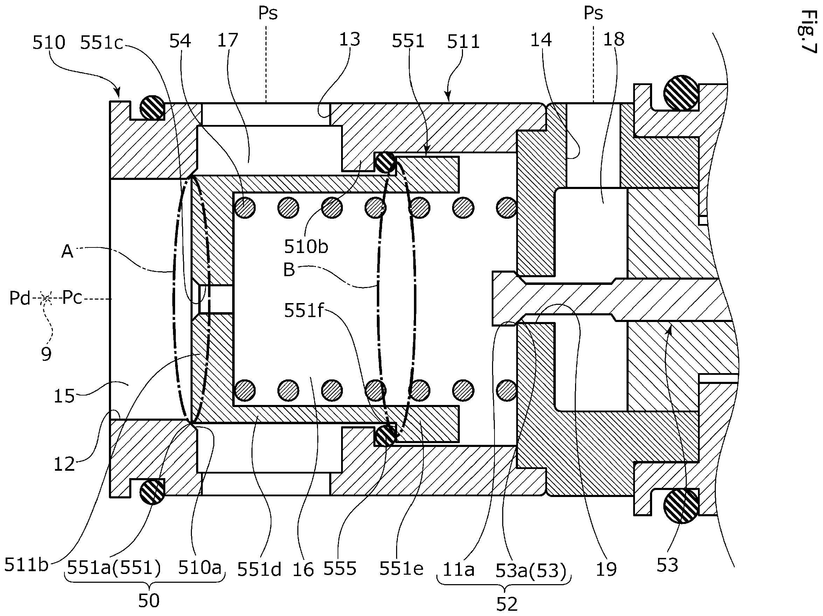

A capacity control valve according to a fifth embodiment of the present invention will be described with reference to FIG. 7. Incidentally, description of the same and duplicated configurations as the configurations of the first embodiment will be omitted.

As shown in FIG. 7, in the fifth embodiment, a CS valve body 551 has a piston shape in which a radially inner side of an axially right end is recessed to the left in the axial direction, and has an orifice 551c penetrating through the center of a bottom portion 551b of the CS valve body 551 in the axial direction. In addition, a large diameter portion 551e is formed on an axially right side of a cylindrical side portion 551d of the CS valve body 551, and an annular step portion 551f extending vertically is formed between the cylindrical side portion 551d and the large diameter portion 551e in an outer peripheral surface of the CS valve body 551.

In addition, a tapered CS valve seat 510a is provided in an inner peripheral surface of a first valve housing 510 on the axially left side of the first Ps port 13. In addition, inside the first valve housing 510, an annular protrusion portion 510b protruding in the radial direction is provided in an inner peripheral surface located on the axially right side of the first Ps port 13, and an O-ring 555 made of rubber or resin and serving as an elastic seal member is internally fitted to and disposed on an axially right side of the annular protrusion portion 510b. Incidentally, in a non-energized state of the capacity control valve V, the O-ring 555 and the annular step portion 551f of the CS valve body 551 can abut against each other.

According to this configuration, since the CS valve 50 has a poppet structure in which an axially left end 551a of the CS valve body 551 abuts against the tapered CS valve seat 510a, which is formed in the first valve housing 510, at a right angle, the CS valve 50 has excellent sealing performance. Further, since a complementary step is formed of the annular step portion 551f of the CS valve body 551 and the annular protrusion portion 510b formed in the inner peripheral surface of the first valve housing 510, and the O-ring 555 is interposed between the annular step portion 551f of the CS valve body 551 and a side surface on the axially right side of the annular protrusion portion 510b of the first valve housing 510 in the axial direction, the suction fluid supplied from the first Ps port 13 to the first suction fluid supply chamber 17 can be in a sealed state. In other words, since the control fluid is easily maintained in the second control fluid supply chamber 16, in a non-energized state of the capacity control valve V, it is easy to uniformly maintain the pressures of the first control fluid supply chamber 15 and the second control fluid supply chamber 16.

Incidentally, since the fifth embodiment has a configuration in which the pressure receiving seal diameter B of the CS valve body 551 to which the fluid in the second control fluid supply chamber 16 is applied is larger than the pressure receiving seal diameter A of the CS valve body 551 to which the fluid in the first control fluid supply chamber 15 is applied (A < B), the closed state of the CS valve 50 in a non-energized state of the capacity control valve V can be reliably maintained.

### {Sixth Embodiment}

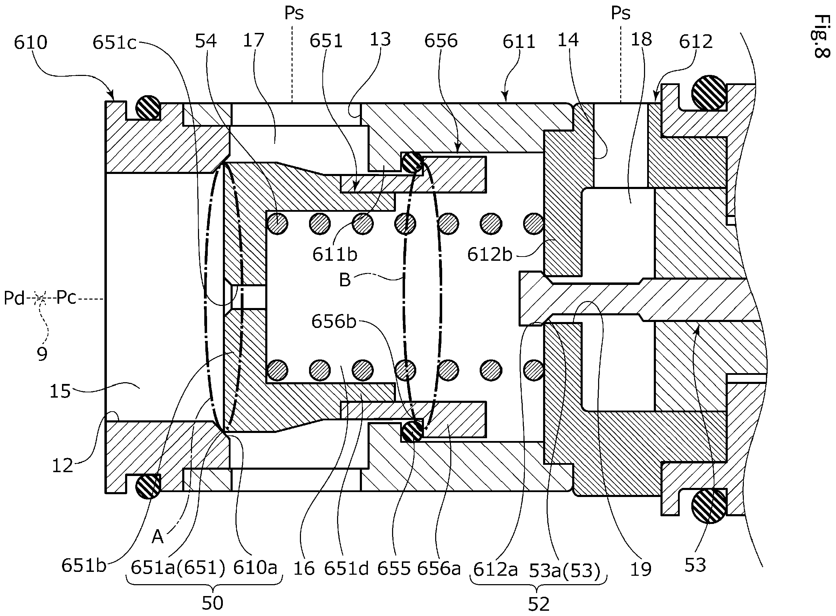

A capacity control valve according to a sixth embodiment of the present invention will be described with reference to FIG. 8. Incidentally, description of the same and duplicated configurations as the configurations of the first embodiment will be omitted.

As shown in FIG. 8, in the sixth embodiment of the present invention, a CS valve body 651 has a piston shape in which a radially inner side of an axially right end is recessed to the left in the axial direction, and has an orifice 651c penetrating through the center of a bottom portion 651b of the CS valve body 651 in the axial direction. In addition, a cylindrical member 656 which is a separate member is externally fitted and integrally connected and fixed to an axially right end portion of a cylindrical side portion 651d of the CS valve body 651. A large diameter portion 656a is formed in an axially right end portion of the cylindrical member 656, and an annular step portion 656b extending vertically is formed in an outer peripheral surface of the cylindrical member 656.

In addition, in the sixth embodiment, in a valve housing, an axially left end portion of a second valve housing 611 is externally fitted to an axially right end portion of a first valve housing 610 from the right in the axial direction, and an axially left end portion of a third valve housing 612 is internally fitted to an axially right end portion of the second valve housing 611 from the right in the axial direction, and thereby the first valve housing 610, the second valve housing 611, and the third valve housing 612 are integrally connected and fixed to each other in a substantially sealed state. The Pc port 12 communicating with the control chamber of the variable displacement compressor is formed in the first valve housing 610. In addition, the first Ps port 13 communicating with the suction chamber of the variable displacement compressor is formed in the second valve housing 611. In addition, the second Ps port 14 communicating with the suction chamber of the variable displacement compressor is formed in the third valve housing 612.

The first valve housing 610 has a cylindrical shape, and a tapered CS valve seat 610a is provided in an opening edge portion on the axially right side.

Inside the second valve housing 611, an annular protrusion portion 611b protruding in the radial direction is provided in an inner peripheral surface located on the axially right side of the first Ps port 13, and an O-ring 655 made of rubber or resin and serving as an elastic seal member is internally fitted to and disposed on an axially right side of the annular protrusion portion 611b. Incidentally, in a non-energized state of the capacity control valve V, the O-ring 655 and the annular step portion 656b of the cylindrical member 656 integrally connected and fixed to the CS valve body 651 can abut against each other.

In the third valve housing 612, a radially inner side of an axially right end is recessed to the left in the axial direction, and the valve port portion 19 is provided which penetrates through the center of a bottom portion 612b in the axial direction and in which a pilot valve seat 612a is formed in an opening edge portion on the axially left side.

According to this configuration, since the CS valve 50 has a poppet structure in which an axially left end 651a of the CS valve body 651 abuts against the tapered CS valve seat 610a, which is formed in the first valve housing 610, at a right angle, the CS valve 50 has excellent sealing performance. Further, since a complementary step is formed of the annular step portion 656b of the cylindrical member 656 integrally connected and fixed to the CS valve body 651 and the annular protrusion portion 611b formed in the inner peripheral surface of the second valve housing 611, and the O-ring 655 is interposed between the annular step portion 656b of the cylindrical member 656 and a side surface on the axially right side of the annular protrusion portion 611b of the second valve housing 611, the suction fluid supplied from the first Ps port 13 to the first suction fluid supply chamber 17 can be in a sealed state. In other words, since the control fluid is easily maintained in the second control fluid supply chamber 16, in a non-energized state of the capacity control valve V, it is easy to uniformly maintain the pressures of the first control fluid supply chamber 15 and the second control fluid supply chamber 16.

Incidentally, since the sixth embodiment has a configuration in which the pressure receiving seal diameter A of the CS valve body 651 to which the fluid in the first control fluid supply chamber 15 is applied is the same as the pressure receiving seal diameter B of the CS valve body 651 to which the fluid in the second control fluid supply chamber 16 is applied (A = B), the influence of the pressure of the fluid on the CS valve body 651 in a non-energized state of the capacity control valve V is canceled.

The embodiments of the present invention have been described above with reference to the drawings; however, the specific configuration is not limited to the embodiments, and the present invention also includes changes or additions that are made without departing from the scope of the appended claims.

For example, in the embodiments, a mode has been described in which the control fluid is supplied from the first control fluid supply chamber 15 to the second control fluid supply chamber 16 through the orifice formed in the CS valve body; however, the present invention is not limited to this mode, and an orifice for supplying the control fluid to the second control fluid supply chamber 16 may be provided in the valve housing. In this case, the orifice provided in the valve housing may communicate with the first control fluid supply chamber 15, or may directly communicate with the control chamber of the variable displacement compressor.

In addition, a mode has been described in which the orifice formed in the CS valve body is a through-hole, but the orifice may have other shapes such as a cutout, and may be a variable orifice in which the passage area of the fluid is variable.

In addition, in the embodiments, the pilot valve seat has been described as being provided in the second control fluid supply chamber 16; however, the present invention is not limited to this configuration, and the pilot valve seat may be provided in the second suction fluid supply chamber 18.

In addition, in the embodiments, the coil spring 54 has been described as being also disposed in the second control fluid supply chamber 16; however, the present invention is not limited to this configuration, and for example, the coil spring 54 may be disposed in other places such as in the first control fluid supply chamber 15. In addition, the coil spring 54 may be a tension spring instead of a compression spring depending on the location of disposition.

### {REFERENCE SIGNS LIST}

- 9: Fixed orifice
- 10: First valve housing (valve housing, control fluid side housing)
- 10a: CS valve seat
- 11: Second valve housing (valve housing, suction fluid side housing)
- 11a: Pilot valve seat
- 12: Pc port
- 13: First Ps port
- 14: Second Ps port
- 15: First control fluid supply chamber (first space)
- 16: Second control fluid supply chamber (second space)
- 17: First suction fluid supply chamber
- 18: Second suction fluid supply chamber
- 50: CS valve
- 51: CS valve body
- 51a: Axially left end
- 51b: Bottom portion
- 51c: Orifice
- 51d: Cylindrical side portion
- 52: Pilot valve
- 53: Rod (Pilot valve body)
- 53a: Abutting portion
- 54: Coil spring (biasing member)
- 80: Solenoid
- 85: Coil spring
- 210: First valve housing
- 210a: CS valve seat
- 211: Second valve housing
- 211a: Pilot valve seat
- 310: First valve housing
- 310a: CS valve seat
- 311: Second valve housing
- 311d: Annular groove
- 355: O-ring (elastic seal member)
- 410: First valve housing
- 410c: Annular protrusion portion
- 410d: Annular groove
- 451: CS valve body
- 451f: Annular step portion
- 455: O-ring (elastic body)
- 455a: CS valve seat
- 510: First valve housing
- 510a: CS valve seat
- 510b: Annular protrusion portion
- 551: CS valve body
- 551f: Annular step portion
- 555: O-ring (elastic seal member)
- 610: First valve housing
- 610a: CS valve seat
- 611: Second valve housing
- 611b: Annular protrusion portion
- 612: Third valve housing
- 612a: Pilot valve seat
- 651: CS valve body
- 655: O-ring (elastic seal member)
- 656: Cylindrical member
- 656b: Annular step portion
- Pc: Control pressure
- Pd: Discharge pressure
- Ps: Suction pressure
- V: Capacity control valve

## Claims

1. A capacity control valve (V) comprising:
a valve housing (10, 11, 210, 211, 310, 311, 410, 411, 510, 511, 610, 611, 612) to which a suction fluid of a suction pressure (Ps) and a control fluid of a control pressure (Pc) are supplied;
a solenoid (80);
a CS valve (50) formed of a CS valve body (51) that partitions an inside of the valve housing (10) into a first space (15) and a second space (16) and moves according to the suction pressure (Ps) of the suction fluid and the control pressure (Pc) of the control fluid, and a CS valve seat (10a, 210a, 310a, 455a, 510a, 610a) with which the CS valve body (51, 451, 551, 651) is configured for coming into contact; and
a biasing member (54) that biases the CS valve body (51) in a valve closing direction of the CS valve; **characterized in that**
the capacity control valve (V) further comprises a pilot valve (52) formed of a pilot valve body (53) to be driven by the solenoid (80) and a pilot valve seat (11a, 211a, 612a) with which the pilot valve body (53) is configured for coming into contact,
wherein the control fluid flows into the first space (15), the control fluid flows into the second space (16) via an orifice (51c, 451c, 551c, 651c), and a fluid of the second space (16) is dischargeable to an outside by the pilot valve (52) .

2. The capacity control valve (V) according to claim 1,
wherein the pilot valve (52) discharges the fluid of the second space (16) toward a suction chamber in which an external suction fluid is housed.

3. The capacity control valve (V) according to claim 1 or 2,
wherein an opening degree of the pilot valve (52) is adjustable.

4. The capacity control valve (V) according to any one of claims 1 to 3,
wherein the CS valve body (51, 451, 551, 651) has a piston shape, and a cylindrical side portion of the CS valve body (51, 451, 551, 651) slides on an inner peripheral surface of the valve housing (10, 11, 210, 211, 310, 311, 410, 411, 510, 511, 610, 611, 612).

5. The capacity control valve (V) according to claim 4,
wherein an elastic seal member (355) is disposed between the cylindrical side portion of the CS valve body (51) and the inner peripheral surface of the valve housing (311).

6. The capacity control valve (V) according to claim 4 or 5,
wherein a complementary step (451f, 551f) is formed in the cylindrical side portion of the CS valve body (451, 551) and the inner peripheral surface of the valve housing (410, 510) .

7. The capacity control valve (V) according to any one of claims 1 to 6,
wherein the orifice (51c, 451c, 551c, 651c) is provided in the CS valve body (51).

8. The capacity control valve (V) according to any one of claims 1 to 7,
wherein the pilot valve seat (11a, 211a, 612a) is formed in the second space (16).

9. The capacity control valve (V) according to any one of claims 1 to 8,
wherein the CS valve seat (455a) is formed of an elastic body (455).

10. The capacity control valve (V) according to any one of claims 1 to 9,
wherein the biasing member (54) is disposed in the second space (16).

11. The capacity control valve (V) according to any one of claims 8 to 10,
wherein the valve housing (10) is formed of a control fluid side housing in which the CS valve seat (10a) is provided, and a suction fluid side housing (11) in which the pilot valve seat (11a) is provided.

## Patentansprüche

1. Leistungsregelventil (V), bestehend aus:
einem Ventilgehäuse (10, 11, 210, 211, 310, 311, 410, 411, 510, 511, 610, 611, 612), dem ein Ansaugfluid mit einem Ansaugdruck (Ps) und ein Steuerfluid mit einem Steuerdruck (Pc) zugeführt werden,
einer Magnetspule (80),
einem CS-Ventil (50), das aus einem CS-Ventilkörper (51) gebildet ist, der einen Innenraum des Ventilgehäuses (10) in einen ersten Raum (15) und einen zweiten Raum (16) unterteilt und sich entsprechend dem Ansaugdruck (Ps) des Ansaugfluids und dem Steuerdruck (Pc) des Steuerfluids bewegt, und einen CS-Ventilsitz (10a, 210a, 310a, 455a, 510a, 610a), mit dem der CS-Ventilkörper (51, 451, 551, 651) so konfiguriert ist, dass er in Kontakt kommt, und
einem Vorspannelement (54), das den CS-Ventilkörper (51) in einer Ventilschließrichtung des CS-Ventils vorspannt, **dadurch gekennzeichnet, dass**
das Leistungsregelventil (V) ferner ein Vorsteuerventil (52) umfasst, das aus einem Vorsteuerventilkörper (53), der von der Magnetspule (80) angetrieben wird, und einem Vorsteuerventilsitz (11a, 211a, 612a) gebildet ist, mit dem der Vorsteuerventilkörper (53) so konfiguriert ist, dass er in Kontakt kommt,
wobei das Steuerfluid in den ersten Raum (15) strömt, das Steuerfluid über eine Öffnung (51c, 451c, 551c, 651c) in den zweiten Raum (16) strömt, und ein Fluid des zweiten Raums (16) durch das Vorsteuerventil (52) nach außen abführbar ist.

2. Leistungsregelventil (V) nach Anspruch 1,
wobei das Vorsteuerventil (52) das Fluid des zweiten Raums (16) in Richtung einer Ansaugkammer abführt, in der ein externes Ansaugfluid untergebracht ist.

3. Leistungsregelventil (V) nach Anspruch 1 oder 2,
wobei ein Öffnungsgrad des Vorsteuerventils (52) einstellbar ist.

4. Leistungsregelventil (V) nach einem der Ansprüche 1 bis 3,
wobei der CS-Ventilkörper (51, 451, 551, 651) eine Kolbenform hat, und ein zylindrischer Seitenabschnitt des CS-Ventilkörpers (51, 451, 551, 651) auf einer inneren Umfangsfläche des Ventilgehäuses (10, 11, 210, 211, 310, 311, 410, 411, 510, 511, 610, 611, 612) gleitet.

5. Leistungsregelventil (V) nach Anspruch 4,
wobei ein elastisches Dichtungselement (355) zwischen dem zylindrischen Seitenabschnitt des CS-Ventilkörpers (51) und der inneren Umfangsfläche des Ventilgehäuses (311) angeordnet ist.

6. Leistungsregelventil (V) nach Anspruch 4 oder 5,
wobei eine korrespondierende Stufe (451f, 551f) in dem zylindrischen Seitenabschnitt des CS-Ventilkörpers (451, 551) und der inneren Umfangsfläche des Ventilgehäuses (410, 510) ausgebildet ist.

7. Leistungsregelventil (V) nach einem der Ansprüche 1 bis 6,
wobei die Öffnung (51c, 451c, 551c, 651c) in dem CS-Ventilkörper (51) vorgesehen ist.

8. Leistungsregelventil (V) nach einem der Ansprüche 1 bis 7,
wobei der Vorsteuerventilsitz (11a, 211a, 612a) in dem zweiten Raum (16) ausgebildet ist.

9. Leistungsregelventil (V) nach einem der Ansprüche 1 bis 8,
wobei der CS-Ventilsitz (455a) aus einem elastischen Körper (455) gebildet ist.

10. Leistungsregelventil (V) nach einem der Ansprüche 1 bis 9,
wobei das Vorspannelement (54) in dem zweiten Raum (16) angeordnet ist.

11. Leistungsregelventil (V) nach einem der Ansprüche 8 bis 10,
wobei das Ventilgehäuse (10) aus einem steuerfluidseitigen Gehäuse, in dem der CS-Ventilsitz (10a) vorgesehen ist, und einem ansaugfluidseitigen Gehäuse (11), in dem der Vorsteuerventilsitz (11a) vorgesehen ist, gebildet ist.

## Revendications

1. Vanne de commande de capacité (V), comprenant :
un logement de vanne (10 ; 11 ; 210 ; 211 ; 310 ; 311 ; 410 ; 411 ; 510 ; 511 ; 610 ; 611 ; 612) auquel un fluide d'aspiration d'une pression d'aspiration (Ps) et un fluide de commande d'une pression de commande (Pc) sont fournis ;
un solénoïde (80) ;
une vanne CS (50) constitué d'un corps de vanne CS (51) qui divise l'intérieur du logement de vanne (10) en un premier espace (15) et un second espace (16) et se déplace en fonction de la pression d'aspiration (Ps) du fluide d'aspiration et de la pression de commande (Pc) du fluide de commande, et un siège de vanne CS (10a, 210a, 310a, 455a, 510a, 610a) avec lequel le corps de vanne CS (51, 451, 551, 651) est configuré pour venir en contact ; et
un élément de sollicitation (54) qui sollicite le corps de vanne CS (51) dans une direction de fermeture de vanne de la vanne CS ; **caractérisé en ce que**
la vanne de commande de capacité (V) comprend en outre une vanne pilote (52) formée d'un corps de vanne pilote (53) devant être entraîné par le solénoïde (80) et d'un siège de vanne pilote (11a, 211a, 612a) avec lequel le corps de vanne pilote (53) est configuré pour venir en contact,
dans laquelle le fluide de commande s'écoule dans le premier espace (15), le fluide de commande s'écoule dans le second espace (16) via un orifice (51c, 451c, 551c, 651c), et un fluide du second espace (16) peut être évacué vers l'extérieur par la vanne pilote 52).

2. Vanne de commande de capacité (V)selon la revendication 1, dans laquelle la vanne pilote (52) évacue le fluide du second espace (16) vers une chambre d'aspiration dans laquelle un fluide d'aspiration externe est logé.

3. Vanne de commande de capacité (V)selon la revendication 1 ou 2, dans laquelle un degré d'ouverture de la vanne pilote (52) est ajustable.

4. Vanne de commande de capacité (V) selon l'une quelconque des revendications 1 à 3,
dans laquelle le corps de vanne CS (51 ; 451 ; 551 ; 651) présente une forme de piston, et une partie latérale cylindrique du corps de vanne CS (51 ; 451 ; 551 ; 651) coulisse sur une surface périphérique interne du logement de vanne (10 ; 11 ; 210 ; 211 ; 310 ; 311 ; 410 ; 411 ; 510 ; 511 ; 610 ; 611 ; 612).

5. Vanne de commande de capacité (V)selon la revendication 4,
dans laquelle un élément d'étanchéité élastique (355) est disposé entre la partie latérale cylindrique du corps de vanne CS (51) et la surface périphérique intérieure du logement de vanne (311).

6. Vanne de commande de capacité (V)selon la revendication 4 ou 5,
dans laquelle un gradin supplémentaire (451f, 551f) est disposée dans la partie latérale cylindrique du corps de vanne CS (451, 551) et la surface périphérique intérieure du logement de vanne (410, 510).

7. Vanne de commande de capacité (V) selon l'une quelconque des revendications 1 à 6,
dans laquelle l'orifice (51c, 451c, 551c, 651c) est prévu dans le corps de vanne CS (51).

8. Vanne de commande de capacité (V) selon l'une quelconque des revendications 1 à 7,
dans laquelle le siège de vanne pilote (11a, 211a, 612a) est formé dans le second espace (16).

9. Vanne de commande de capacité (V) selon l'une quelconque des revendications 1 à 8,
dans laquelle le siège de vanne CS (455a) est formé d'un corps élastique (455).

10. Vanne de commande de capacité (V) selon l'une quelconque des revendications 1 à 9,
dans laquelle l'élément de sollicitation (54) est disposé dans le second espace (16).

11. Vanne de commande de capacité (V) selon l'une quelconque des revendications 8 à 10,
dans laquelle le logement de vanne (10) est formé d'un logement latéral de fluide de commande dans lequel le siège de vanne CS (10a) est prévu, et d'un logement latéral de fluide d'aspiration (11) dans lequel le siège de vanne pilote (11a) est prévu.
